# EUROPÄISCHE PATENTSCHRIFT

(11) **EP 1 556 652 B1**
(45) Veröffentlichungstag und Bekanntmachung des Hinweises auf die Patenterteilung: **17.10.2007**
(21) Anmeldenummer: 03775266.4
(22) Anmeldetag: 30.10.2003
(51) Int. Cl.: F24F 11/00, G01P 13/00, H01H 35/40

(54) **VORRICHTUNG ZUR ÜBERWACHUNG EINER LUFTFÖRDERMENGE ODER EINES LUFTVOLUMENSTROMS**
DEVICE FOR MONITORING AN AIR SUPPLY FLOW OR A VOLUMETRIC AIR FLOW
SYSTEME SERVANT A SURVEILLER UN DEBIT DE REFOULEMENT D'AIR OU UN DEBIT VOLUMETRIQUE D'AIR

(30) Priorität: 31.10.2002 DE 10250873
(43) Veröffentlichungstag der Anmeldung: 27.07.2005
(73) Patentinhaber: STEGO-Holding GmbH, 74523 Schwäbisch Hall (DE)
(72) Erfinder: EISENHAUER, Hartmut, 74545 Michelfeld (DE)
(74) Vertreter: Bohnenberger, Johannes
(86) Internationale Anmeldenummer: PCT/EP2003/012101
(87) Internationale Veröffentlichungsnummer: WO 2004/040203

(56) Entgegenhaltungen:
- DE-A- 2 744 901
- GB-A- 1 595 804
- GB-A- 2 238 664
- US-A- 3 992 598

## Beschreibung

Die Erfindung betrifft eine Vorrichtung zum Überwachen einer Luftfördermenge oder eines Luftvolumenstroms nach Patentanspruch 1.

Einrichtungen, die elektrische und/oder elektronische Geräte enthalten, beispielsweise Schaltschränke, müssen in der Regel klimatisiert oder aktiv belüftet werden. Zwangsbelüftungen dieser Art dienen dazu, die Luft im Schaltschrank umzuwälzen und die Geräte gezielt zu belüften, weil die Wärmeemission der eingebauten Geräte, aber auch der Wärmeaustausch mit der Umgebung ein funktionsgefährdendes schrankinternes Klima herbeiführen können. Um eine kontinuierliche Lüftung zu gewährleisten, bedarf es neben der eigentlichen Lüftungsvorrichtung einer zusätzlichen Kontrolleinheit, die den Lüftungsbetrieb anhand der Luftfördermenge bzw. des Luftvolumenstroms überwacht.

Vorrichtungen zur Überwachung der Luftfördermenge oder des Luftvolumenstroms z.B. US 3 992 598 werden heute oft in rein elektronischer Bauweise angeboten. Diese arbeiten i. d. R. nach dem thermodynamischen Prinzip. Ein Messfühler wird dabei von innen beheizt, um so eine Temperaturdifferenz zwischen dem vorbeiströmenden Medium und dem Sensor zu erzielen. Da dem Messfühler durch das vorbeiströmende Medium Energie entzogen wird, kann der Strömungszustand des Mediums abgeleitet werden. Einrichtungen dieser Art erfordern eine hoch komplexe Elektronik, die äußerst kostspielig ist und deren reibungsloser Betrieb von bestimmten Einflussgrößen abhängt. So sind besondere Ausführungsformen von Sensoren nötig, z. B. Sensoren mit größeren Massen, wenn ein geringer Durchfluss registriert werden soll, weil die üblicherweise verwendeten Messfühler in diesem Falle nicht ansprechen. Dies hat zur Folge, dass durch das Zusammenwirken der zusätzlichen Masse und des geringen Durchflusses verlängerte Ansprechzeiten in Kauf genommen werden müssen. Störungen im Arbeitsablauf, hervorgerufen durch unzureichende Lüftung, können so erst nach geraumer Zeit erfasst werden.

Andere Arten von Vorrichtungen zur Überwachung der Luftfördermenge bzw. des Luftvolumenstroms weisen mechanisch arbeitende Bauteile auf, beispielsweise Anströmeinrichtungen, deren Lageänderung Rückschlüsse auf das zu detektierende Medium zulassen. Um die Anströmeinrichtung wieder in die Ausgangslage zurückzuführen, werden weitere mechanisch arbeitende Bauteile, z. B. Federn, benötigt. Zusätzliche Bauteile dieser Art erhöhen jedoch die Anfälligkeit der Überwachungsvorrichtung, z. B. aufgrund erhöhten Verschleißes. Insbesondere ist es schwierig, die Federn entsprechend auszulegen, so dass die Überwachung des Luftstroms bei unterschiedlichsten Strömungsgeschwindigkeiten und/oder Durchflussraten gewährleistet ist.

Der vorliegenden Erfindung liegt die Aufgabe zugrunde, eine Vorrichtung zur Überwachung der Luftfördermenge bzw. des Luftvolumenstroms auf einfachste Weise so aufzubauen, dass eine hohe Zuverlässigkeit gewährleistet ist.

Diese Aufgabe wird durch eine Vorrichtung nach Patentanspruch 1 gelöst.

Insbesondere wird die Aufgabe durch eine Vorrichtung zur Überwachung einer Luftfördermenge oder eines Luftvolumenstroms gelöst, die eine Anströmeinrichtung aufweist, deren Lage gegenüber einer Halterung entgegen einer Haltekraft F_{M} veränderbar ist, wobei die Anströmeinrichtung von einem zu überwachenden Luftstrom zur Erzeugung einer Änderung ihrer Lage anströmbar ist. Es sind Magneteinrichtungen zur Erzeugung eines von der Lage der Anströmeinrichtung abhängigen Magnetfeldes vorgesehen, sowie Detektionsmittel zur Erfassung eines Magnetfeldes und Messmittel zur Erzeugung eines vom Magnetfeld abhängigen Messsignals, wobei das Magnetfeld mindestens einen Teil der Haltekraft F_{M} bildet.

Ein wesentlicher Punkt der Erfindung liegt darin, dass die Anströmeinrichtung, deren Lage sich durch den auftreffenden Luftstrom ändert, bei nachlassender Strömungsgeschwindigkeit und/oder geringer werdender Durchflussrate aufgrund der magnetischen Haltekraft F_{M} eine Rückstellkraft erfährt, die die Anströmeinrichtung wieder in die Ausgangslage zurückführt, ohne dass eine gesonderte Rückstelleinrichtung vorgesehen werden muss.

So ist für die Vorrichtung in einer ersten bevorzugten Ausführungsform vorgesehen, dass die Magneteinrichtungen einen Permanentmagneten umfassen. Dieser bewirkt den ordnungsgemäßen Betrieb der Vorrichtung ohne gesonderte Stromzuführung, wie dies beispielsweise bei einem Elektromagneten der Fall wäre. Die Vorrichtung kann einfach und kostengünstig hergestellt werden und ist nahezu wartungsfrei. Grundsätzlich kann aber auch ein Elektromagnet die gewünschte Funktion erfüllen.

Des Weiteren ist als eine der bevorzugten Ausführungsformen vorgesehen, dass der Permanentmagnet an der Anströmeinrichtung angebracht ist, so dass auch hier eine einfache und kostengünstige Herstellung gewährleistet wird. Durch das Anbringen des Permanentmagneten auf der Anströmeinrichtung wird eine direkte Kopplung von Magnetfeld und Schaltwirkung erreicht, ohne weitere Bauteile zu benötigen.

Eine andere mögliche Realisierung der Vorrichtung besteht darin, dass der Permanentmagnet an der Halterung und ein magnetisches, insbesondere ein ferromagnetisches Element auf der Anströmeinrichtung angebracht ist. Dies schützt zum einen den Magneten, zum anderen kann die Vorrichtung durch eine genau definierte Größe des magnetischen Elements äußerst empfindlich auf Strömungsgeschwindigkeiten und/oder Durchflussraten eingestellt werden.

In einer weiteren vorteilhaften Ausführungsform der erfindungsgemäßen Vorrichtung umfasst die Anströmeinrichtung eine derart drehbar aufgehängte Klappe, dass der Luftstrom ein Drehmoment auf die Klappe um ihre Aufhängeachse erzeugt. Eine solche Klappe ist mit einfachen Mitteln lagerbar.

Eine erfindungsgemäße Lösung sieht vor, dass die Anströmeinrichtung mit mindestens einem Ausgleichsgewicht oder dergleichen Masseausgleichselement versehen ist, so dass sie schwerkraft- und lageunabhängig einbaubar ist. Damit kann die Vorrichtung zur Überwachung einer Luftfördermenge oder eines Luftvolumenstroms an jeder beliebigen Stelle und in jeder beliebigen Ausrichtung angebracht werden. Dies ist insbesondere dann von Vorteil, wenn für das Anbringen wenig Platz zur Verfügung steht bzw. schwer zugängliche Stellen zu nutzen sind.

In einer besonderen Ausführungsform wird der Masseausgleich durch eine exzentrische Lagerung der Anströmeinrichtung realisiert. Vorteilhaft dabei ist, dass keine weiteren Bauteile als Masseausgleichselement eingebaut werden müssen und so eine einfache und kostengünstige Herstellung der Vorrichtung ermöglicht wird. Aufgrund der eingesparten Massen kann die Anströmeinrichtung zudem schneller auf niedrige Strömungsgeschwindigkeiten und/oder Durchflussraten ansprechen.

Alternativ oder zusätzlich kann das Ausgleichsgewicht mindestens Teile der Magneteinrichtungen umfassen. Auch hier kann somit die Anzahl weiterer Bauteile als Masseausgleichselemente reduziert werden, so dass eine einfache und kostengünstige Herstellung der Vorrichtung gewährleistet wird. Das Ansprechverhalten der Anströmeinrichtung auf niedrige Strömungsgeschwindigkeiten und/oder Durchflussraten wird ebenfalls positiv beeinflusst.

Des Weiteren ist als eine der bevorzugten Ausführungsformen vorgesehen, dass die Messmittel einen Reedkontakt umfassen, der in einem Reedkontaktschalter angeordnet ist. Vorteilhaft dabei ist, dass der Reedkontakt auf ein Magnetfeld anspricht und daher berührungslos schaltet. Schalter und Anströmeinrichtung müssen demgemäß nicht durch Leitungen miteinander verbunden werden, so dass ein kompakter, einfacher Aufbau der Vorrichtung gegeben ist.

Der Reedkontaktschalter ist in einer weiteren Ausführungsform derart angeordnet, dass er im Magnetfeld mindestens einen Teil der Haltekraft F_{M} erzeugt. Magnetische, insbesondere ferromagnetische Elemente, die dem Reedkontaktschalter immanent sind, ermöglichen bereits die Anziehung zwischen Schalter und Permanentmagnet.

Dies lässt wieder einen einfachen, kompakten und daher kostengünstigen Aufbau der Vorrichtung zu, weil keine weiteren Bauteile benötigt werden.

Eine bevorzugte Realisierung der Vorrichtung besteht darin, dass die Einstelleinrichtungen derart vorgesehen sind, dass die Haltekraft F_{M} einstellbar ist. Dadurch wird ein Optimieren der Vorrichtung auf unterschiedlichste Strömungsgeschwindigkeiten und/oder Durchflussraten ermöglicht. Insbesondere können Grenzwerte für Strömungsgeschwindigkeiten und/oder Durchflussraten bedarfsgerecht eingestellt werden. Dies ist dann von Vorteil, wenn z. B. verschiedenartig dimensionierte, zu belüftende Räume, beispielsweise Schaltschränke mit Wärme erzeugenden Geräten, einer unterschiedlichen Belüftung bedürfen.

In einer besonderen Ausführungsform der erfindungsgemäßen Vorrichtung wird eine Einstellung der Haltekraft F_{M} über zusätzlich in das Magnetfeld einbringbare, magnetische, insbesondere ferromagnetische Elemente ermöglicht, welche die Einstelleinrichtungen umfassen. Demzufolge können Grenzwerte für Strömungsgeschwindigkeiten und/oder Durchflussraten auf einfachste Weise definiert werden, so dass eine äußerst zuverlässige Arbeitsweise der Vorrichtung gewährleistet ist.

Alternativ oder zusätzlich kann die Haltekraft F_{M} dadurch eingestellt werden, dass der Reedkontaktschalter in seinem Abstand zum Permanentmagneten zur Bildung der Einstelleinrichtungen einstellbar ist. Die Veränderung des Abstandes kann beispielsweise durch einfaches Verschieben des Permanentmagneten auf der Anströmeinrichtung erfolgen. Weitere Elemente zur Einstellung der Haltekraft F_{M} sind somit nicht mehr erforderlich.

Eine weitere erfindungsgemäße Ausführungsform sieht vor, dass eine wirksame Fläche der Anströmeinrichtung veränderbar ist. Dies hat insbesondere den Vorteil, dass die Ansprechempfindlichkeit der Vorrichtung variiert werden kann.

In einer besonderen Ausführungsform ist das Gehäuse derart ausgebildet, dass die wirksame Fläche der Anströmeinrichtung durch die als Gehäuse ausgebildete Halterung veränderbar ist. Dies kann beispielsweise durch Öffnungen im Gehäuse realisiert werden. Es bietet sich daher eine extrem kostengünstige Serienfertigung an.

In einer weiteren vorteilhaften Ausführungsform ist die Anströmeinrichtung derart angebracht, dass sie im Ruhezustand ist, wenn der Permanentmagnet auf dem kürzesten Weg zum Reedkontaktschalter durch die Haltekraft F_{M} gehalten wird. Dadurch wird gewährleistet, dass die Vorrichtung auf einfachste Weise gestaltet werden kann.

Eine bevorzugte Realisierung der Vorrichtung besteht darin, dass die Messmittel in der als Gehäuse ausgebildeten Halterung angeordnet sind. Dadurch werden die Messmittel vor äußeren Einflüssen geschützt und können so zuverlässig und präzise arbeiten.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: einen Längsschnitt der erfindungsgemäßen Vorrichtung;
- Fig. 2 a: einen Schnitt entlang der Linie II - II aus Fig. 1;

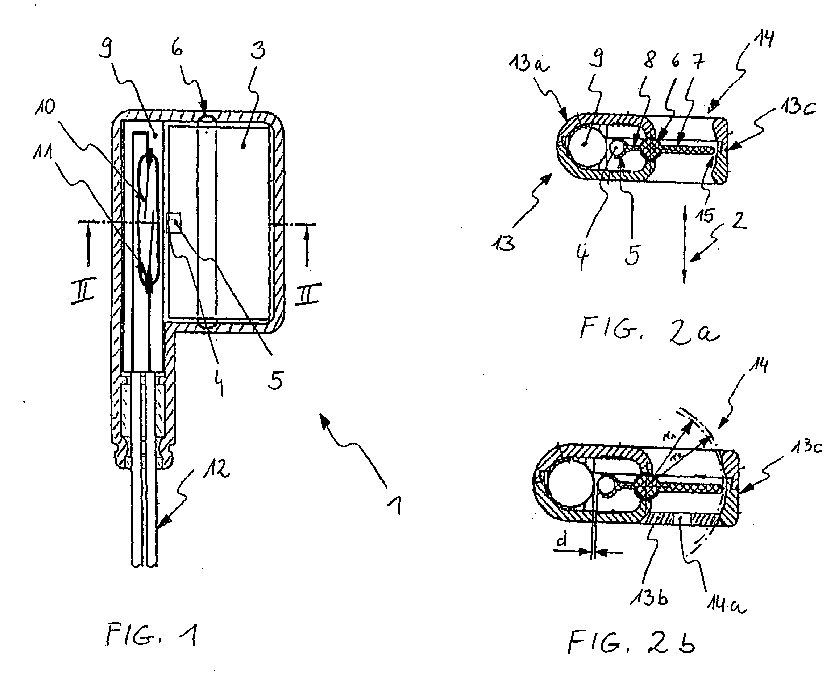

- Fig. 2 b: eine Vergrößerung des Schnitts entlang der Linie II - II aus Fig. 1.

Fig. 1 zeigt einen Längsschnitt der erfindungsgemäßen Vorrichtung 1 zur Überwachung einer Luftfördermenge oder eines Luftvolumenstroms 2 in einer besonderen Ausführungsform. Dabei ist eine Anströmeinrichtung als drehbar gelagerte Klappe 3 vorgesehen, auf der ein Permanentmagnet 4 in einer Magnethalterung 5 angebracht ist. Die Klappe 3 ist in einem Drehlager 6 aufgehängt und wird daher durch den Luftstrom 2 über eine Drehbewegung ausgelenkt. Der Permanentmagnet 4 liegt auf der Symmetrieachse, senkrecht zur Drehachse, am Rand der Klappe 3.

Da die Klappe 3 zumindest mit Teilen der Magneteinrichtungen versehen ist - hier der Permanentmagnet 4 -, muss die Klappe 3 mit mindestens einem Ausgleichsgewicht oder dergleichen Masseausgleichselement versehen sein, damit sie schwerkraft- und lageunabhängig einbaubar ist. So ist die Klappe 3 in der vorliegenden Darstellung exzentrisch angeordnet, um auf diese Weise einen Masseausgleich anhand unterschiedlicher Flächengrößen sicherzustellen. In diesem Ausführungsbeispiel ist ein wirksamer Flächenanteil 7 als Ausgleichsfläche vorgesehen, d. h. derjenige, größere Flächenanteil der Klappe 3, der mit dem Luftstrom 2 in Wechselwirkung tritt. Der Permanentmagnet 4 ist auf einem kleineren Flächenanteil 8 angeordnet.

Die vorliegende Abbildung zeigt einen Reedkontaktschalter 9, der Reedkontakte 10 umfasst. Vorzugsweise ist der Reedkontaktschalter 9 vergossen, um insbesondere den Glaskörper zu schützen. Die Stromversorgung erfolgt über Leitungen 12. Der Schalter 9 ist in diesem Falle so angeordnet, dass die Wechselwirkung zwischen dem Permanentmagneten 4 und den Reedkontakten 10 im Magnetfeld mindestens einen Teil der Haltekraft F_{M} erzeugt. Zusätzlich können die in der Regel aus einer Eisen-Nickel-Legierung bestehenden Kontakthalterungen 11 mit dem Magnetfeld des Permanentmagneten 4 wechselwirken.

Das Ausführungsbeispiel weist Einstelleinrichtungen auf, die das Einstellen der Haltekraft F_{M} zulassen. Wie in Fig. 1 erkennbar, ist die Haltekraft F_{M} auf einfachste Art und Weise dadurch voreingestellt, dass ein Abstand d zwischen dem Reedkontaktschalter 9 und dem Permanentmagneten 4 im Sinne eines beabsichtigten Detektionsverhaltens der Vorrichtung 1 gewählt wird.

Die Fig. 2 a und 2 b zeigen einen Schnitt entlang der Linie II - II aus Fig. 1. Fig. 2 b zeigt eine Vergrößerung der Fig. 2 a, um weitere Details deutlich zu machen. Die drehbar gelagerte Klappe 3, der Permanentmagnet 4, die Magnethalterung 5 und der Reedkontaktschalter 9 sind hier noch einmal in Draufsicht dargestellt. Der kleinere Flächenanteil 8, der Permanentmagnet 4 in der Magnethalterung 5 und der Reedkontaktschalter 9 sind im Inneren des abgeschlossenen Gehäuseteils 13 a vorgesehen und demgemäß geschützt untergebracht. Des Weiteren weist die Vorrichtung 1 sowohl Einström- als auch Ausströmöffnungen 14 auf, über die der Luftstrom 2 durch die Vorrichtung 1 gelenkt wird.

Die Vorrichtung 1 weist, wie in den Fig. 2 a und 2 b gezeigt, zwischen der beweglichen Klappe 3 und einem seitlichen Gehäuseteil 13 c einen Dichtspalt 15 auf, da das seitliche Gehäuseteil 13 c auf der, der Klappe 3 zugewandten Seite mit einem Radius r₂ = r₁ + x geformt, wobei der Radius r₂ demgemäß um einen Wert x größer ist, als ein Radius r₁ des Kreises, den der wirksame Flächenanteil 7 der Klappe 3 bei seiner Rotationsbewegung beschreibt. Wird nun ein Längsgehäuseteil 13 b gemäß Fig. 2 b in eine Öffnung 14 des Gehäuses eingesetzt, so ergibt sich bei einer verringerten Öffnung 14 a und Strömung durch den Dichtspalts 15 ein Druckabfall, so dass die Empfindlichkeit der Vorrichtung sinkt.

Das Wirkprinzip der Anordnung ist folgendes:
Ein Luftstrom 2 erreicht durch die Einströmöffnung 14 a den wirksamen Flächenanteil 7 der drehbar gelagerten Klappe 3. Aufgrund der Drehlagerung 6, in der die Klappe 3 - ähnlich einer Wippe - aufgehängt ist, erzeugt der zu detektierende Luftstrom 2 In diesem Ausführungsbeispiel ein Drehmoment auf die Klappe 3 um ihre Aufhängeachse. Das heißt die Ausweichbewegung der Klappe 3, induziert durch den Luftstrom 2, stellt eine Rotationsbewegung dar. Die Vorrichtung 1 ist so konstruiert, dass sowohl ein blasender als auch saugender Luftstrom 2 detektiert werden kann. Dazu ist die Klappe 3 rechts- als auch linksdrehend auslenkbar. Ein- und Ausströmöffnungen 14 arbeiten dann invers. Im Ruhezustand wird die Klappe 3 aufgrund der Wechselwirkung des Magnetfeldes des Permanentmagneten 4 mit dem magnetischen Material im Reedkontaktschalter 9 in dieser Ruhestellung gehalten. Der Reedkontakt 10 wird durch das Magnetfeld des Permanentmagneten 4 geschlossen und kann ggf. ein Warnsignal induzieren. Ein etwaiger blasender oder saugender Luftstrom 2 muss die Klappe 3 nun gegen die magnetisch wirkende Haltekraft F_{M} auslenken. Dabei entfernt sich der Permanentmagnet 4 vom Reedkontakt 10, so dass dieser aufgrund des schwächer werdenden Magnetfeldes öffnet. Der unterbrochene Stromkreis signalisiert dann eine ordnungsgemäße Lüftung. Bei nachlassender Strömungsgeschwindigkeit und/oder Durchflussrate des Luftstroms 2 wird sich die Klappe 3 wieder ihrer Ruhelage annähern, weil die Haltekraft F_{M} im ausgelenkten Zustand der Klappe 3 als Rückstellkraft wirkt. Wie bereits oben erwähnt, ist kein zusätzlicher Rückstellmechanismus nötig, um die Klappe 3 wieder in ihre Ausgangslage zurückzuführen; die Wechselwirkung zwischen dem magnetischen Material im Reedkontaktschalter 9 und dem Magnetfeld des Permanentmagneten 4 ist ausreichend, um die Klappe 3 zurückzustellen. Sobald sich die Klappe 3 wieder dem Reedkontakt 10 nähert, schließt dieser und kann ggf. erneut einen Warnmechanismus auslösen. Der Begriff des Annäherns' der Klappe 3 an den Reedkontakt 10 ist je nach gewünschtem Detektionsverhalten der Vorrichtung 1 differenziert zu betrachten. Die im Folgenden ausgeführten Alternativen zu Konstruktion und Wirkungsweise der Vorrichtung 1 werden diesbezüglich näher darauf eingehen.

Generell ist es möglich, die Anströmeinrichtung nicht als drehbar gelagerte Klappe 3 vorzusehen, sondern diese als Platte auszuführen, deren Lageänderung durch eine translatorische Bewegung zu verwirklichen wäre. Die Platte würde dann beispielsweise auf Schienen geführt oder durch mehrere Magnete gehalten und durch einen Luftstrom 2 mitgenommen bzw. angesaugt werden.

Der Permanentmagnet 4 kann grundsätzlich auch durch einen Elektromagneten ersetzt werden, der ebenfalls in der Magnethalterung 5 zu befestigen wäre. Die Leitungen zur Stromversorgung des Elektromagneten könnten dann beispielsweise im Inneren des Drehlagers verlaufen.

Bei Verwendung des Permanentmagneten 4 könnte dieser auch an einer Halterung des Gehäuses 13 fest angebracht werden. Die Magnethalterung 5 würde dann dazu dienen, ein zusätzliches magnetisches, insbesondere ferromagnetisches Element zu tragen, um die Magneteinrichtungen in diesem Falle zu vervollständigen.

Wie oben beschrieben, muss die Klappe 3 mit mindestens einem Ausgleichsgewicht oder dergleichen Masseausgleichselement versehen sein, um zusätzliche Massen, beispielsweise die des Permanentmagneten 4 zu kompensieren. Dieser Masseausgleich kann neben der exzentrischen Anordnung der Klappe 3 auch durch andere Maßnahmen realisiert werden. Die beiden Flächen einer etwaig konzentrisch gelagerten Klappe 3 könnten unterschiedliche Materialien aufweisen, so dass deren Dichteunterschied einen Masseausgleich mit sich brächte. Auch Materialaussparungen oder zusätzlich anzubringende Elemente würden dem Ausgleich dienen.

Die Figuren 1, 2 a und 2 b zeigen ein Ausführungsbeispiel, bei welchem die Haltekraft F_{M} dadurch voreingestellt ist, dass der Abstand d zwischen Reedkontaktschalter 9 und Permanentmagnet 4 im Sinne eines beabsichtigten Detektionsverhaltens der Vorrichtung 1 gewählt wird. In dem hier vorliegenden Beispiel ist der Abstand d konstant, er könnte aber durchaus veränderbar vorgesehen werden. Dazu müsste das Gehäuse 13 so gestaltet sein, dass die Klappe 3 variabel in das Gehäuse 13 einsetzbar wäre. Durch einen beispielsweise größeren Abstand d des Permanentmagneten 4 vom Reedkontaktschalter 9 würde die Haltekraft F_{M} bereits von niedrigen Strömungsgeschwindigkeiten und/oder Durchflussraten überwunden werden und so eine Lageänderung der Klappe 3 ermöglichen. Auch ließen sich die Öffnungen 14 über einen Überwurf, als Teil des Gehäuses 13 und an diesem stoffschlüssig befestigt oder abnehmbar vorgesehen, verändern. Der Begriff ,stoffschlüssig' umfasst hier sowohl die Verbindungsbildung durch die klassischen Stoffschlussverfahren, wie z. B. Schweißen oder Kleben als auch jegliche sonstige Möglichkeit der Verbindungsbildung, insbesondere das Herstellen eines einstückigen Gehäuses 13. Je nach Größe der Öffnung 14 a und des Dichtspalts 15 wäre nun der Druck bzw. Sog des Luftstroms 2 und damit die Ansprechempfindlichkeit der Vorrichtung 1 zu regulieren. Zusätzliche magnetische, insbesondere ferromagnetische Elemente ließen ein weiteres Einstellen der Haltekraft F_{M} zu, indem die Wechselwirkung zwischen dem magnetischen Element und dem Magnetfeld des Permanentmagneten 4 verändert würde. Vorzugsweise wäre das magnetische Element im Reedkontaktschalter 9 anzuordnen, um die magnetische Wirkung der Kontakte 10 zu unterstützen. Auch das Variieren des vom Elektromagneten induzierten Magnetfeldes gewährt eine weitere Möglichkeit, die Haltekraft F_{M} einzustellen.

In dem vorliegenden Ausführungsbeispiel der Fig. 1, 2 a und 2 b wird die Leckage am Dichtspalt 15 möglichst gering gehalten, indem die Form des seitlichen Gehäuseteils 13 c der Bahn angeglichen wird, die der wirksame Flächenanteil 7 der Klappe 3 während seiner Auslenkung beschreibt. Zusätzliche Elastomerdichtlippen oder -bürsten könnten die Leckage weiter eindämmen, erhöhen aber unter Umständen die Reibung.

Welche Lösung zweckmäßig ist, hängt vom Einsatzbereich der Vorrichtung 1 ab. Es wäre durchaus möglich, den Dichtspalt bewusst breiter zu wählen, damit eine Auslenkung der Klappe 3 nur bei einer Mindestströmungsgeschwindigkeit und/oder - durchflussrate des Luftstroms 2 einsetzt. Bei zu geringer Strömungsgeschwindigkeit und/oder Durchflussrate könnte dann aufgrund der gewollten Leckage kein ausreichender Staudruck aufgebaut werden, um eine Auslenkung der Klappe 3 zu erwirken.

### Bezugszeichenliste

- 1: Vorrichtung zur Überwachung einer Luftfördermenge oder eines Luftvolumenstroms
- 2: Luftstrom
- 3: Klappe
- 4: Permanentmagnet
- 5: Magnethalterung
- 6: Drehlager
- 7: Wirksamer Flächenanteil
- 8: Kleinerer Flächenanteil
- 9: Reedkontaktschalter
- 10: Reedkontakte
- 11: Kontakthalterungen
- 12: Leitungen
- 13: Gehäuse
- 13 a: Abgeschlossenes Gehäuseteil
- 13 b: Längsgehäuseteil
- 13 c: Seitliches Gehäuseteil
- 14: Öffnungen
- 14 a: Verringerte Öffnung

- d: Abstand
- r₁: Radius 1
- r₂: Radius 2

## Patentansprüche

1. Vorrichtung (1) zur Überwachung einer Luftfördermenge oder eines Luftvolumenstroms (2), insbesondere von Lüftern, wobei
- die Vorrichtung (1) eine Anströmeinrichtung (3) aufweist, deren Lage gegenüber einer Halterung entgegen einer Haltekraft F_{M} veränderbar ist;
- die Anströmeinrichtung (3) von einem zu überwachenden Luftstrom (2) zur Erzeugung einer Änderung ihrer Lage anströmbar ist;
- Magneteinrichtungen (4) zur Erzeugung eines von der Lage der Anströmeinrichtung (3) abhängigen Magnetfeldes vorgesehen sind;
- Detektionsmittel zur Erfassung des Magnetfeldes vorgesehen sind;
- Messmittel (9) zur Erzeugung eines vom Magnetfeld abhängigen Messsignals vorgesehen sind,
**dadurch gekennzeichnet, dass**
die Anströmeinrichtung (3) mit mindestens einem Ausgleichsgewicht oder dergleichen Masseausgleichselement versehen ist, derart, dass sie schwerkraft- und lageunabhängig einbaubar ist und
dass das Magnetfeld mindestens einen Teil der Haltekraft F_{M} bildet.

2. Vorrichtung nach Anspruch 1,
**dadurch gekennzeichnet,**
**dass** die Magneteinrichtungen einen Permanentmagneten (4) umfassen.

3. Vorrichtung nach Anspruch 2,
**dadurch gekennzeichnet,**
**dass** der Permanentmagnet (4) an der Anströmeinrichtung (3) angebracht ist.

4. **Vorrichtung nach Anspruch 1 oder** 2,
**dadurch gekennzeichnet,**
**dass** der Permanentmagnet (4) an der Halterung (13) fest angebracht und ein magnetisches, insbesondere ferromagnetisches Element auf der Anströmeinrichtung (3) angebracht ist.

5. Vorrichtung nach einem der vorhergehenden Ansprüche,
**dadurch gekennzeichnet,**
**dass** die Anströmeinrichtung eine derart drehbar aufgehängte Klappe (3) umfasst, dass der Luftstrom (2) ein Drehmoment auf die Klappe (3) um ihre Aufhängeachse erzeugt.

6. Vorrichtung nach einem der vorhergehenden Ansprüche,
**dadurch gekennzeichnet,**
**dass** die Anströmeinrichtung (3) exzentrisch gelagert und ein größerer Flächenanteil (7) der Anströmeinrichtung (3) als Ausgleichsgewicht vorgesehen Ist.

7. Vorrichtung nach einem der vorhergehenden Ansprüche,
**dadurch gekennzeichnet,**
**dass** das Ausgleichsgewicht mindestens Teile der Magneteinrichtungen (4) mit umfasst.

8. Vorrichtung nach einem der vorhergehenden Ansprüche,
**dadurch gekennzeichnet,**
**dass** die Messmittel einen Reedkontakt (10) umfassen, der in einem Reedkontaktschalter (9) angeordnet ist.

9. Vorrichtung nach Anspruch 8,
**dadurch gekennzeichnet,**
**dass** der Reedkontaktschalter (9) derart angeordnet ist, dass er im Magnetfeld mindestens einen Teil der Haltekraft F_{M} erzeugt.

10. Vorrichtung nach einem der vorhergehenden Ansprüche,
**dadurch gekennzeichnet,**
**dass** Einstelleinrichtungen derart vorgesehen sind, dass die Haltekraft F_{M} einstellbar Ist.

11. Vorrichtung nach Anspruch 10,
**dadurch gekennzeichnet,**
**dass** die Einstelleinrichtungen zusätzlich in das Magnetfeld einbringbare, magnetische, insbesondere ferromagnetische Elemente umfassen.

12. Vorrichtung nach Anspruch 10 oder 11,
**dadurch gekennzeichnet,**
**dass** der Reedkontaktschalter (9) in seinem Abstand zum Permanentmagneten (4) zur Bildung der Einstelleinrichtungen einstellbar ist.

13. Vorrichtung nach einem der Ansprüche 10 bis 12,
**dadurch gekennzeichnet,**
**dass** eine wirksame Fläche der Anströmeinrichtung (3) veränderbar ist.

14. Vorrichtung nach Anspruch 13,
**dadurch gekennzeichnet,**
**dass** das Gehäuse (13) derart ausgebildet ist, dass die wirksame Fläche der Anströmeinrichtung (3) durch die als Gehäuse (13) ausgebildete Halterung veränderbar ist.

15. Vorrichtung nach Anspruch 8 oder 9,
**dadurch gekennzeichnet,**
**dass** die Anströmeinrichtung (3) derart angebracht ist, dass sie im Ruhezustand ist, wenn der Permanentmagnet (4) auf dem kürzesten Weg zum Reedkontaktschalter (9) durch die Haltekraft F_{M} gehalten wird.

16. Vorrichtung nach einem der vorhergehenden Ansprüche,
**dadurch gekennzeichnet,**
**dass** die Messmittel (9) in der als Gehäuse (13) ausgebildeten Halterung angeordnet sind.

## Claims

1. Device (1) for monitoring an air supply flow or a volumetric air stream (2), in particular from fans, wherein
- the device (1) has an approach flow element (3), the position of which in relation to a mounting can be altered against a retaining force F_{M};
- the approach flow element (3) can be blown by a monitored air stream (2) so as to produce a change in the element's position;
- magnet elements (4) are provided to generate a magnetic field dependent on the position of the approach flow element (3);
- detection means are provided to register the magnetic field;
- measuring means (9) are provided to generate a measuring signal dependent on the magnetic field,
**characterised in that**
the approach flow element (3) is provided with at least one counterweight or similar mass compensating element, in such a way that it can be installed independently of gravitation and position and
**in that** the magnetic field forms at least a part of the retaining force F_{M}.

2. Device according to Claim 1,
**characterised in that**
the magnet elements comprise a permanent magnet (4).

3. Device according to Claim 2,
**characterised in that**
the permanent magnet (4) is accommodated on the approach flow element.

4. Device according to Claim 1 or 2,
**characterised in that**
the permanent magnet (4) is securely accommodated on the mounting (13) and a magnetic, in particular a ferromagnetic, element is accommodated on the approach flow element (3).

5. Device according to one of the previous claims,
**characterised in that**
the approach flow element comprises a flap (3) rotatably suspended in such a way that the air stream (2) generates a torque on the flap (3) about its axis of suspension.

6. Device according to one of the previous claims,
**characterised in that**
the approach flow element (3) is eccentrically mounted and a larger part of the surface (7) of the approach flow element (3) is provided as a counterweight.

7. Device according to one of the previous claims,
**characterised in that**
the counterweight comprises at least part of the magnet elements (4).

8. Device according to one of the previous claims,
**characterised in that**
the measuring means comprises a reed contact (10), which is arranged in a reed contact switch (9).

9. Device according to Claim 8,
**characterised in that**
the reed contact switch (9) is arranged in such a way that it generates at least a part of the retaining force F_{M} in the magnetic field.

10. Device according to one of the previous claims,
**characterised in that**
adjusting elements are provided in such a way that the retaining force F_{M} can be adjusted.

11. Device according to Claim 10,
**characterised in that**
the adjusting elements additionally comprise magnetic, in particular ferromagnetic, elements that can be brought into the magnetic field.

12. Device according to Claim 10 or 11,
**characterised in that**
the reed contact switch (9) can be adjusted in terms of its distance from the permanent magnet (4) to form the adjusting elements.

13. Device according to Claims 10 to 12,
**characterised in that**
an effective surface of the approach flow element (3) can be altered.

14. Device according to Claim 13,
**characterised in that**
the housing (13) is configured in such a way that the effective surface of the approach flow element (3) can be altered by the mounting configured as the housing (13).

15. Device according to Claim 8 or 9,
**characterised in that**
the approach flow element (3) is accommodated in such a way that it is in a state of rest when the permanent magnet (4) is held by the retaining force F_{M} at the shortest distance to the reed contact switch (9).

16. Device according to one of the previous claims,
**characterised in that**
the measuring means (9) are arranged in the mounting configured as the housing (13).

## Revendications

1. Système (1) servant à surveiller un débit de refoulement d'air ou un débit volumétrique d'air (2), en particulier provenant de ventilateurs,
- le système (1) présentant un dispositif de soufflage (3) dont la position par rapport à un support peut être modifiée sous l'effet d'une force de rétention F_{M} ;
- le dispositif de soufflage (3) pouvant être soufflé par un courant d'air (2) à surveiller afin de permettre un changement de sa position;
- des dispositifs magnétiques (4) étant prévus pour produire un champ magnétique dépendant de la position du dispositif de soufflage (3) ;
- des moyens de détection étant prévus pour détecter le champ magnétique ;
- des moyens de mesure (9) étant prévus pour produire un signal de mesure dépendant du champ magnétique,
**caractérisé en ce**
**que** le dispositif de soufflage (3) est pourvu d'au moins un contrepoids ou d'un élément d'équilibrage des masses analogue, de telle sorte qu'il peut être monté indépendamment de la force de gravité et de la position et
de telle sorte que le champ magnétique forme au moins une partie de la force de rétention F_{M}.

2. Système selon la revendication 1,
**caractérisé en ce**
**que** les dispositifs magnétiques comportent un aimant permanent (4).

3. Système selon la revendication 2,
**caractérisé en ce**
**que** l'aimant permanent (4) est monté sur le dispositif de soufflage (3).

4. Système selon la revendication 1 ou 2,
**caractérisé en ce**
**que** l'aimant permanent (4) est solidement monté sur le support (13) et en ce qu'un élément magnétique, en particulier ferromagnétique, est monté sur le dispositif de soufflage (3).

5. Système selon l'une quelconque des revendications précédentes,
**caractérisé en ce**
**que** le dispositif de soufflage comporte un volet (3) fixé de manière à pouvoir tourner de telle sorte que le courant d'air (2) produit un couple de rotation sur le volet (3) autour de son axe de fixation.

6. Système selon l'une quelconque des revendications précédentes,
**caractérisé en ce**
**que** le dispositif de soufflage (3) est logé de manière excentrée et qu'une plus grande partie de la surface (7) du dispositif de soufflage (3) sert de contrepoids.

7. Système selon l'une quelconque des revendications précédentes,
**caractérisé en ce**
**que** le contrepoids comporte au moins des parties des dispositifs magnétiques (4).

8. Système selon l'une quelconque des revendications précédentes,
**caractérisé en ce**
**que** les moyens de mesure comportent un contact Reed (10), lequel est disposé dans un commutateur de contact Reed (9).

9. Système selon la revendication 8,
**caractérisé en ce**
**que** le commutateur de contact Reed (9) est disposé de telle sorte qu'il produit au moins une partie de la force de rétention F_{M} dans le champ magnétique.

10. Système selon l'une quelconque des revendications précédentes,
**caractérisé en ce**
**que** les dispositifs de réglage sont prévus de telle sorte que la force de rétention F_{M} peut être ajustée.

11. Système selon la revendication 10,
**caractérisé en ce**
**que** les dispositifs de réglage comportent en outre des éléments magnétiques, en particulier ferromagnétiques, pouvant être insérés dans le champ magnétique.

12. Système selon la revendication 10 ou 11,
**caractérisé en ce**
**que** le commutateur de contact Reed (9) peut être ajusté au niveau de son intervalle par rapport aux aimants permanents (4) afin de former les dispositifs de réglage.

13. Système selon l'une quelconque des revendications 10 à 12,
**caractérisé en ce**
**qu'**une surface active du dispositif de soufflage (3) peut être modifiée.

14. Système selon la revendication 13,
**caractérisé en ce**
**que** le boîtier (13) est conçu de telle sorte que la surface active du dispositif de soufflage (3) peut être remplacée par le support conçu comme un boîtier (13).

15. Système selon la revendication 8 ou 9,
**caractérisé en ce**
**que** le dispositif de soufflage (3) est monté de telle sorte qu'il se trouve à l'état de repos lorsque l'aimant permanent (4) est maintenu sur le plus court chemin par rapport au commutateur de contact Reed (9) grâce à la force de rétention F_{M}.

16. Système selon l'une quelconque des revendications précédentes,
**caractérisé en ce**
**que** les moyens de mesure (9) sont disposés dans le support conçu comme un boîtier (13).
